# EUROPEAN PATENT SPECIFICATION

(11) **EP 1 229 430 B1**
(45) Date of publication and mention of the grant of the patent: **30.05.2018**
(21) Application number: 01410012.7
(22) Date of filing: 30.01.2001
(51) Int. Cl.: G06F 1/32, G06F 11/14

(54) **Power management system and method**
System und Verfahren zur Leistungssteuerung
Système et procédé de gestion d'énergie

(43) Date of publication of application: 07.08.2002
(73) Proprietor: Hewlett-Packard Development Company, L.P., Houston, TX 77070 (US)
(72) Inventor: Neuman, Paul, 38640 Claix (FR); Combe, Jean-Michel, 38420 Domène (FR)
(74) Representative: Zimmermann, Tankred Klaus

(56) References cited:
- US-A- 5 978 922
- US-A- 6 131 166

## Description

The present invention relates to a power management system and method, and, more particularly, to power management of computing systems.

The computing industry has developed a common interface for enabling robust operating system directed motherboard system configuration and power management (OSPM) of entire computer systems. The common interface definition and functionality manifests itself in the Advanced Configuration and Power Interface (ACPI) specification. The current version of the ACPI is version 2, having a release date of July 27, 2000 together with the ACPI Errata version 1.3, November 27, 2000.

The ACPI specification defines a number of operating states for computer systems, such as, for example, desktop, mobile, workstation and server computers and laptop computers. Currently the ACPI specification defines five states, that is, states S0, S1, S2, S3 and S4. Each of the five states represents a different state or degree of power consumption of the associated computer system. State S0 represents the conventional operating state or system working state in which the computer system is fully functional and is not in a power saving mode. The remaining states, that is, states S1-S4, represent the system sleeping states in which the computer system has undertaken steps to at least reduce, and preferably minimise, power consumption.

Of particular interest are the S3 and S4 states. The ACPI specification defines the behaviour of the S3 state such that less power is consumed within the S3 state as compared to the S2 state; the processor does not execute instructions; the processor context is not maintained; the dynamic RAM context is maintained; power resources are held in a state that is compatible with the S3 state; devices associated with the computer system are operable such that they are compatible with the S3 state, that is, only devices that solely reference power resources are in the ON state (all other devices are in the off or D3 state) ; and devices that are enabled to wake the system, and that can do so from their current state, can initiate a hardware event that transitions the system to S0.

The ACPI specification defines the system behaviour in the S4 state as follows: the S4 state is logically lower than the S3 state and is arranged to consume less power than the S3 state; the processor (s) is (are) not executing instructions; the processor context is not maintained; RAM context is not maintained; power resources are in a state that is compatible with the S4 state, that is, all power resources that supply system level power in the S0, S1, S2 or S3 states are in the OFF state; and all devices are operable so as to be compatible with the current power resources states, that is, all devices are in the D3 state when the system is in the S4 state.

A system, upon entering the S3 state or in preparation for entering the S3 state, saves, for example, the data necessary for resumption of the normal working state, S0, to RAM. Therefore, it can be appreciated that upon wake-up from the state S3, that the system context saved to RAM can be accessed and restored relative quickly. Therefore, the S3 sleeping state is known as a low wake-latency sleep state. However, the S3 state suffers from a major inadequacy in the event of a power failure that adversely affects the RAM such that the content of the RAM is lost. Such a power failure prevents a reliable transition to the working system state S0 and a re-boot of the computer system may be necessary. It can be appreciated that the data of applications and system context will be lost under such circumstances. Furthermore, a relatively long period of time will elapse during the re-boot before the computer system reaches the system working state S0.

In contrast, the OSPM of the system, before entering the S4 state, saves a significant amount of data to a non-volatile storage medium such as, for example, a HDD. Conventionally, data comprising the entire content of the RAM and the current system context are saved to a file, typically called "*HIBERFIL.SYS*", which is stored on the HDD.

Upon wake-up from the S4 state, the OSPM of the system is responsible for restoring the system context. Therefore, a system transition from the S4 state to the S0 state involves a significant amount of data recovery. The content of the file "*HIBERFIL.SYS*" is retrieved from the HDD and loaded into RAM and is used to restore the system context as it was at the time of entering the state S4. Due to the need to access a relatively slow storage device, access times of the storage device are relatively long. Therefore, the S4 state is considered to be the longest wake-latency sleeping state. Since a non-volatile storage medium is used to store the recovery data, the system state S4 will allow recovery from a power failure. However, the time taken to effect such a recovery is unacceptably long.
US-A-5,978,922 describes a computer system having a hibernation-type resume function which is performed by using a hard disk. Provided on the hard disk are storage areas for storing ordinary data. Also provided on the hard disk is a resume storage area which is large enough to save resume data required to perform a resume operation. The resume storage area is controlled by a BIOS provided for performing the resume operation, not by the operating system (OS) of the computer system. The BIOS accesses the resume storage area when the power supply to the system is switched off, thereby saving the resume data in a resume data memory.
US-A-6,131,166 describes a power management framework which comprises a plurality of Java TM programming interfaces (APIs) which are part of the Java TM Platform. Therefore, the same framework is configured to enable the same power-aware Java TM applications to execute on many different computing platforms, operating systems, and computer hardware. The programming interfaces, with the proper privilege, to influence the current system power state.; The notification programming interface permits Java TM applications to be notified regarding transitions from one system power state to another system power state. The exception programming interface permits Java TM applications to be notified regarding errors in power management. The device-level programming interface permits Java TM applications to obtain a current device power state and, with the proper privilege, to influence the current device power state. The power management framework defines a plurality of standardized system power states, standardized device power states, and power state transitions.
It is an object of the invention to provide an improved approach for resuming a power save state after a failure of a power supply in a computer system.
This object is achieved by a method according to claim 1, and by a system according to claim 6.

Accordingly, a first aspect of the present invention provides a method for power management of a system comprising a processor, a power supply and first storage medium and second non-volatile storage medium having first and second data access times respectively such that the first data access time is less than the second data access time; the system being operable in a plurality of states, each state having an associated level of system power consumption, the method comprising the steps of: saving data representing a current system context to allow a transition to a first state of the plurality of states from a second state of the plurality of states to both the first and second storage media; placing the system in the second state; recovering the data from the first storage medium in response to detection of an event while the system is in the second state or, in the event that the power supply, while in the second state, failed to supply sufficient power to the system to maintain the second state, recovering the data from the second storage medium; restoring the system context using the recovered data; and resuming, after restoring the system context following a power failure, the second state of the plurality of states.

Advantageously, embodiments of the present invention enable a power management system to be realised that provides, in the absence of a power failure, a relatively fast wake-up time from a sleep state and, following a power failure during such a sleep state, allows recovery of the system context to the sleep state.

A second aspect of the present invention provides a power management system comprising a processor, a power supply and first storage medium and second non-volatile storage medium having first and second data access times respectively such that the first data access time is less than the second data access time; the system being operable in a plurality of states, each state having an associated level of system power consumption, the system further comprising: means for saving data, representing a current system context to allow a transition to a first state of the plurality of states from a second state of the plurality of states, to both the first and second storage media; means for placing the system in the second state; means for recovering the data from the first storage medium in response to detection of an event while the system is in the second state or, in the event that the power supply, while in the second state, failed to supply sufficient power to maintain the second state, recovering the data from the second storage medium; means for restoring the system context using the recovered data; and means for resuming, after restoring the system context following a power failure, the second state of the plurality of states.

Embodiments of the present invention will now be described by way of example only with reference to the accompanying drawings in which:
figure 1 shows schematically a computer system within which power management can be realised;
figure 2 illustrates schematically ACPI states and state transitions for a prior art power management system;
figure 3 depicts states and associated state transitions of a power management system according to a first embodiment;
figure 4 shows a flowchart of a power-off or sleep process according to an embodiment;
figure 5 depicts a flowchart of a wake-up or on process according to an embodiment; and
figure 6 illustrates a flowchart for system context recovery following a power failure during a sleep state.

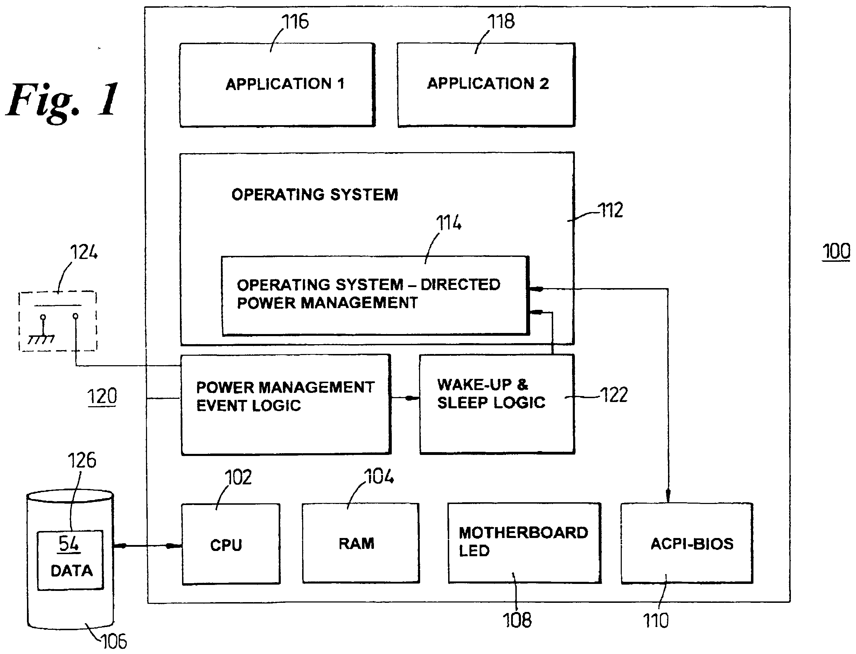

Figure 1 illustrates schematically a computer system 100 within which ACPI specification power management can be realised. Figure 1 also illustrates other functional elements of the computer system 100. The computer system 100 comprises a processor 102, RAM 104, a non-volatile storage medium 106, such as, for example, a HDD. The motherboard (not shown) of the computer system comprises a LED 108 to provide a visual indication of the sleeping state of the computer system even when the system cover or housing has been removed. The motherboard also supports an ACPI BIOS 110 or at least a BIOS 110 which supports ACPI routines. As is conventional, the computer system has an operating system 112 which is arranged to implement operating system directed power management (OSPM) 114. The computer system will, of course, run various applications 116 and 118. Additional hardware and software functionality is provided in the form of power management event detection logic 120 which detects events in response to which the current state S0-S4 of the computer system should change to another state. For example, the user may depress an on button 124, in which case the computer system should effect a transition from a current sleeping state to a working state S0. Alternatively, the user may instigate a software shutdown of the computer system 100 in response to which the computer system should effect a transition from the current state S0 to a sleeping state. The events that the power management event detection logic 120 may detect also include other events, such as modem generated events signalling to the OSPM that data is being received and at least the modem and RAM should be suitably powered-up to allow reception of the data.

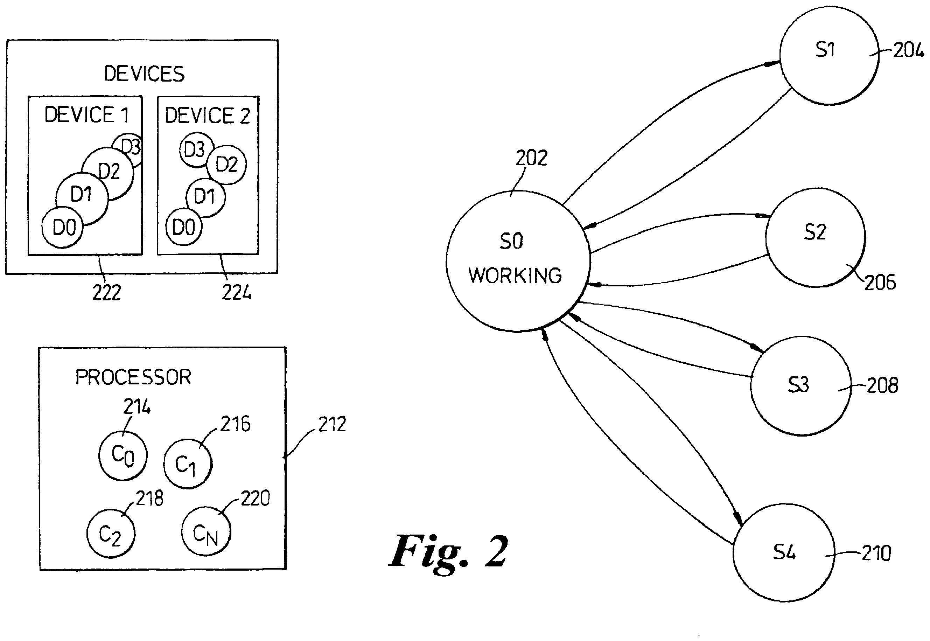

Referring to figure 2, there is shown a state diagram 200 for an OSPM system according to the prior art. The state diagram has five states, that is, states S0 202, S1 204, S2 206, S3 208 and S4 210. The five states are briefly described below.

State S0: While a system is in state S0, the system is said to be in a working state. The behaviour of that state is defined such that a processor 212, or, in a multi-processor system, the processors are, in one of a number of so-called processor states, C0 214, C1 216, C2 218,..., CN 220, which each represent varying degrees of processor operation and associated power consumption; the dynamic RAM context is maintained by the processor; any devices 222 and 224 connected to, or forming part of, the system 100 are individually managed by the operating system software and can be in any one of four possible device states D0-D3, which, again, reflect varying degrees of power consumption; and any associated power resources are arranged to be in a state that is compatible with the device states.

State S1: The S1 state 204 is a low wake-up latency sleeping state. In this state, no system context is lost (CPU or chip set) and the system hardware maintains all system context.

State S2: The S2 state 206 is also considered to be a low wake-up latency sleeping state. The S2 state 206 is substantially similar to the S1 state 204 but for the CPU and the system cache context being lost in the S2 state, since, typically, the operating system is responsible for maintaining cache and processor context.

State S3: The S3 state 208 is a low wake-up latency sleeping state where all system context is lost except system memory. The CPU, cache and chip set context are lost in this state. However, the system hardware maintains memory context and restores some CPU and L2 configuration context. The S3 state 208 was described in detail above.

State S4: The S4 state 210 is the lowest power, longest wake-up latency sleeping state supported by ACPI. To reduce power consumption, preferably to a minimum, it is assumed that the hardware platform has powered-off all devices. Platform context is maintained. The S4 state 210 has been described in detail above.

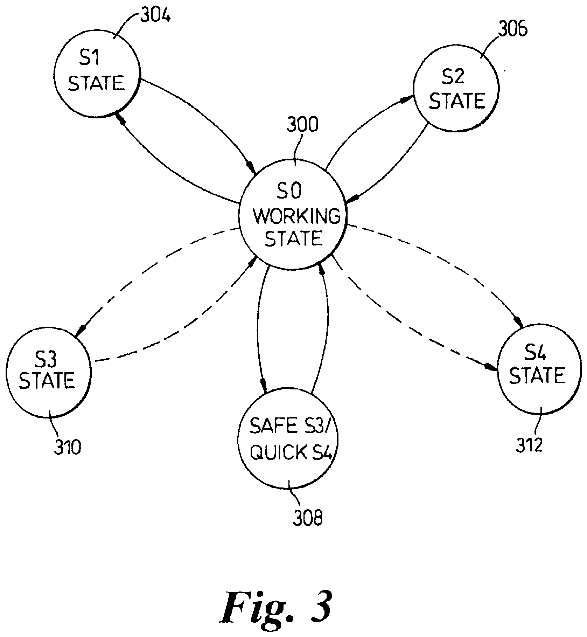

Figure 3 shows a state transition diagram 300 for a power management system according to a first embodiment. Again, it can be seen that the state transition diagram 300 comprises at least the working system state S0 302. Preferably, the conventional states S0, S1 and S2 are also supported in the first embodiment. The states S0-S2 in the first embodiment are substantially identical in operation and realisation to the corresponding states described above in relation to figure 2 and in current ACPI specification.

Additionally, the state diagram 300 illustrates a new state, that is, a Safe S3/Quick S4 state 308 (SS3/QS4). The behaviour of the system in the SS3/QS4 can be characterised by the actions of saving substantially the same data to a non-volatile storage medium 106 as the conventional S4 state while concurrently maintaining the same data as the conventional S3 state in memory. Furthermore, in the SS3/QS4 state only the RAM remains in a powered state while all other aspects of the system adopt substantially the same powered state of the conventional S3 state but for the power management event detection logic 120 to allow a wake-up from that state. As discussed above, the data is saved in a file 126 that is called "HIBERFIL.SYS".

Therefore, if a power failure occurs while the system is in the SS3/QS4 state, the system context can be restored by loading the HIBERFIL.SYS file from, for example, the HDD 106 and restoring the system context. In contrast to the prior art power management state S3, if a power failure occurs, the system context at the time of power failure is recoverable.

In the absence of a power failure, the system context, when waking from the SS3/QS4 state, can be restored within a relatively short period of time, such as, for example, 5 seconds, that is, within a time scale that is comparable to the wake-up time for a conventional S3 state but with the additional security of also being recoverable from a power failure, unlike the conventional S3 state.

Once the context has been restored following a power failure, the system enters or resumes the SS3/QS4 state.

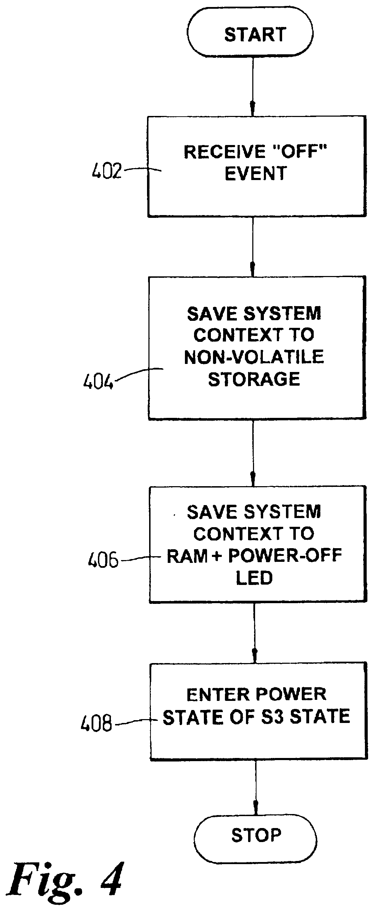

Referring to figure 4 there is shown schematically a flowchart 400 for an off process, that is, a process for notionally switching off the system that utilises the SS3/QS4 state. Upon detection of a power-off event by the power management event detection logic at step 402, the OSPM saves the entire system context to the HDD 106 in the above mentioned file at step 404. In step 406, the power to the internal motherboard LED 108, which provides a visual indication of the sleep state of the system in the event that the system housing has been opened, is removed and the system hardware is arranged to adopt the same power saving configuration as the conventional S3 state in step 408. Once step 404 has been performed, the system has power for the RAM and the recovery data, or S4 data 126, has been stored on the HDD 106.

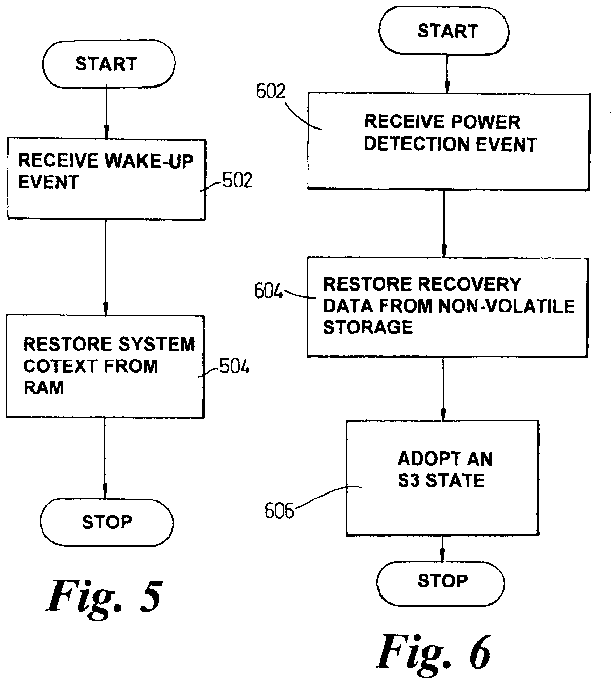

Referring to figure 5, there is shown a flowchart 500 for an "on" process which uses the SS3/QS4 state according to an embodiment. At step 502, the power management event detection logic 120 detects or receives a wake-up event and informs the wake-up and sleep logic 122 of the event. The wake-up event causes the wake-up and sleep logic 122 to instruct the OSPM to restore the system context from RAM at step 504. It can be appreciated that the wake-up process is substantially the same as the conventional S3 wake-up process.

Figure 6 shows a flowchart 600 of a restore process to recover from a power failure while the system was in the SS3/QS4 state. A power return event is detected by the power management event detection logic 120 at step 602 which causes the system to recover the previously stored system context data 126 from, for example, the HDD 106 and to load that data into RAM 104 at step 604. The power configuration of the system is arranged by the OSPM 114 to adopt substantially the same power configuration as in the conventional S3 state in step 606.

A transition from the conventional S3 state to the working state, that is, state S0, takes approximately 5 seconds as does the transition to the S0 state from the SS3/QS4 state, which are both significantly quicker than the current 20-40 second wake-up time for an S4 to S0 transition. However, the SS3/QS4 state has the additional advantage of allowing a consistent or safe recovery from a power failure while the system was in the power saving state SS3/QS4.

Although the above embodiments show a lack of support for S3 and S4 states, it will be appreciated that embodiments can be realised in which the S3 and S4 states are supported in addition to the states of the above embodiments. The states S3 310 and S4 312 are shown in figure 3 as being optionally supported

Furthermore, even though the above embodiments have been described in terms of having a number of system states, the present invention is not limited to such system states. An embodiment can be realised in which other states such as, for example, Legacy states, mechanical-off states G3 and soft-off S5 states are also supported.

Although the above embodiments use a HDD as the non-volatile storage means, it will be appreciated that other forms of non-volatile storage may be used. For example, a flash-memory may be used to store the data to allow recovery from a power failure.

## Claims

1. A method for power management of a system comprising a processor (102), a power supply and a first storage medium (104) and a second non-volatile storage medium (106) having first and second data access times respectively such that the first data access time is less than the second data access time; the system being operable in a plurality of states (300-312), each state having an associated level of system power consumption, the method comprising the steps of:
saving (404, 406) data representing a current system context, to allow a transition to a first state (300) of the plurality of states from a second state (308) of the plurality of states, to both the first and second storage media (104, 106);
placing (408) the system in the second state (308);
recovering the data from the first storage medium (104) in response to the detection of an event while the system is in the second state (308) or, in the event that the power supply, while in the second state (308), failed to supply sufficient power to the system to maintain the second state (308), recovering the data from the second storage medium (108);
restoring the system context using the recovered data; and **characterised by** resuming, after restoring the system context after a power supply failure, the second state (308) of the plurality of states.

2. The method as claimed in claim 1, wherein the step of saving data representing the current system context comprises saving at least one of data relating to a current operational state of the processor (102) and data relating to the content of the first storage medium (104).

3. The method as claimed claim 2, wherein the current operational state of the processor (102) is one of a plurality of operational states of the processor (102).

4. The method as claimed in any preceding claim, wherein the system further comprises at least one device, and in which the step of saving data representing the current system context comprises saving data relating to a current operational state of the at least one device.

5. The method as claimed in claim 4, wherein the current operational state of the at least one device is one of a plurality of operational states of the at least one device.

6. A power management system comprising a processor (102), a power supply and a first storage medium (104) and a second, non-volatile, storage medium having first and second data access times respectively such that the first data access time is less than the second data access time; the system being operable in a plurality of states, each state having an associated level of power consumption, the system further comprising:
means for saving data representing a current system context, to allow a transition to a first state of the plurality of states from a second state of the plurality of states, to both the first and second storage media (104, 106); and
means for placing the system in the second state (308);
means for recovering the data from the first storage medium (104) in response to detection of an event while the system is in the second state (308) or, in the event that the power supply, while in the second state (308), failed to supply sufficient power to maintain the second state (308), recovering the data from the second storage medium (106);
means for restoring the system context using the recovered data; and **characterised by** means for resuming, after restoring the system context after a power supply failure, the second state (308) of the plurality of states.

7. The system as claimed in claim 6, wherein the means for saving data representing the current system context comprises means to save at least one of data relating to a current operational state of the processor (102) and data relating to the content of the first storage medium (104).

8. The system as claimed claim 7, wherein the current operational state of the processor (102) is one of a plurality of operational states of the processor (102).

9. The system as claimed in any of claims 6 to 8, wherein the system further comprises at least one device and means for saving data relating to a current operational state of the at least one device.

10. The system as claimed in claim 9, wherein the current operational state of the at least one device is one of a plurality of operational states of the at least one device.

11. A computer program element for implementing a method as claimed in any of claims 1 to 5.

12. A computer program product comprising a computer readable storage medium having stored thereon a computer program element as claimed in claim 11.

## Patentansprüche

1. Verfahren zur Stromverwaltung eines Systems, das Folgendes umfasst: einen Prozessor (102), eine Stromversorgung und ein erstes Speichermedium (104) und ein zweites nicht flüchtiges Speichermedium (106) mit einer ersten beziehungsweise einer zweiten Datenzugriffszeit, sodass die erste Datenzugriffszeit geringer als die zweite Datenzugriffszeit ist; wobei das System in mehreren Zuständen (300-312) betriebsfähig ist, wobei jeder Zustand einen damit verbundenen Systemstromverbrauchspegel aufweist, wobei das Verfahren die folgenden Schritte umfasst:
Speichern (404, 406) von Daten, die einen aktuellen Systemkontext darstellen, um einen Übergang in einen ersten Zustand (300) der mehreren Zustände von einem zweiten Zustand (308) der mehreren Zustände zu ermöglichen, sowohl auf dem ersten als auch auf dem zweiten Speichermedium (104, 106); Versetzen (408) des Systems in den zweiten Zustand (308);
Wiedergewinnen der Daten von dem ersten Speichermedium (104) als Reaktion auf das Erkennen eines Ereignisses, während sich das System im zweiten Zustand (308) befindet, oder, falls die Stromversorgung während des zweiten Zustands (308) das System nicht mit ausreichend Strom versorgte, um den zweiten Zustand (308) aufrechtzuerhalten, Wiedergewinnen der Daten von dem zweiten Speichermedium (108);
Wiederherstellen des Systemkontexts unter Verwendung der wiedergewonnenen Daten; und
**gekennzeichnet durch**
Wiederaufnehmen des zweiten Zustands (308) der mehreren Zustände nach dem Wiederherstellen des Systemkontexts nach einem Stromausfall.

2. Verfahren nach Anspruch 1, wobei der Schritt des Speicherns von Daten, die den aktuellen Systemkontext darstellen, ein Speichern von Daten, die sich auf einen aktuellen Betriebszustand des Prozessors (102) beziehen, und/oder von Daten, die sich auf den Inhalt des ersten Speichermediums (104) beziehen, umfasst.

3. Verfahren nach Anspruch 2, wobei der aktuelle Betriebszustand des Prozessors (102) einer von mehreren Betriebszuständen des Prozessors (102) ist.

4. Verfahren nach einem der vorhergehenden Ansprüche, wobei das System ferner wenigstens eine Vorrichtung umfasst, und bei dem der Schritt des Speicherns von Daten, die den aktuellen System kontext darstellen, ein Speichern von Daten, die sich auf einen aktuellen Betriebszustand der wenigstens einen Vorrichtung beziehen, umfasst.

5. Verfahren nach Anspruch 4, wobei der aktuelle Betriebszustand der wenigstens einen Vorrichtung einer von mehreren Betriebszuständen der wenigstens einen Vorrichtung ist.

6. Stromverwaltungssystem, das Folgendes umfasst: einen Prozessor (102), eine Stromversorgung und ein erstes Speichermedium (104) und ein zweites, nicht flüchtiges Speichermedium mit einer ersten beziehungsweise einer zweiten Datenzugriffszeit, sodass die erste Datenzugriffszeit geringer als die zweite Datenzugriffszeit ist; wobei das System in mehreren Zuständen betriebsfähig ist, wobei jeder Zustand einen damit verbundenen Stromverbrauchspegel aufweist, wobei das System ferner Folgendes umfasst:
Mittel zum Speichern von Daten, die einen aktuellen Systemkontext darstellen, um einen Übergang in einen ersten Zustand der mehreren Zustände von einem zweiten Zustand der mehreren Zustände zu ermöglichen, sowohl auf dem ersten als auch auf dem zweiten Speichermedium (104, 106); und Mittel zum Versetzen des Systems in den zweiten Zustand (308);
Mittel zum Wiedergewinnen der Daten von dem ersten Speichermedium (104) als Reaktion auf das Erkennen eines Ereignisses, während sich das System im zweiten Zustand (308) befindet, oder, falls die Stromversorgung während des zweiten Zustands (308) nicht ausreichend Strom bereitstellte, um den zweiten Zustand (308) aufrechtzuerhalten, Wiedergewinnen der Daten von dem zweiten Speichermedium (106);
Mittel zum Wiederherstellen des Systemkontexts unter Verwendung der wiedergewonnenen Daten; und **gekennzeichnet durch**:
Mittel zum Wiederaufnehmen des zweiten Zustands (308) der mehreren Zustände nach dem Wiederherstellen des Systemkontexts nach einem Stromausfall.

7. System nach Anspruch 6, wobei das Mittel zum Speichern von Daten, die den aktuellen Systemkontext darstellen, ein Mittel zum Speichern von Daten, die sich auf einen aktuellen Betriebszustand des Prozessors (102) beziehen, und/oder von Daten, die sich auf den Inhalt des ersten Speichermediums (104) beziehen, umfasst.

8. System nach Anspruch 7, wobei der aktuelle Betriebszustand des Prozessors (102) einer von mehreren Betriebszuständen des Prozessors (102) ist.

9. System nach einem der Ansprüche 6 bis 8, wobei das System ferner wenigstens eine Vorrichtung und ein Mittel zum Speichern von Daten, die sich auf einen aktuellen Betriebszustand der wenigstens einen Vorrichtung beziehen, umfasst.

10. System nach Anspruch 9, wobei der aktuelle Betriebszustand der wenigstens einen Vorrichtung einer von mehreren Betriebszuständen der wenigstens einen Vorrichtung ist.

11. Computerprogrammelement zum Implementieren eines Verfahrens nach einem der Ansprüche 1 bis 5.

12. Computerprogrammprodukt, das ein computerlesbares Speichermedium umfasst, das ein darauf gespeichertes Computerprogrammelement nach Anspruch 11 aufweist.

## Revendications

1. Procédé de gestion de l'énergie d'un système comprenant un processeur (102), une alimentation électrique et un premier support de stockage (104) et un second support de stockage non volatile (106) ayant des premier et second temps d'accès aux données respectivement tels que le premier temps d'accès aux données est inférieur au second temps d'accès aux données ; le système pouvant fonctionner dans une pluralité d'états (300-312), chaque état ayant un niveau associé de consommation d'énergie du système, le procédé comprenant les étapes consistant à :
enregistrer (404, 406) des données représentant un contexte de système actuel, pour permettre une transition vers un premier état (300) de la pluralité d'états à partir d'un second état (308) de la pluralité d'états, pour les deux des premier et second supports de stockage (104, 106) ;
placer (408) le système dans le second état (308) ;
récupérer les données à partir du premier support de stockage (104) en réponse à la détection d'un événement alors que le système est dans le second état (308) ou, dans le cas où l'alimentation électrique, dans le second état (308), a échoué à fournir une puissance suffisante au système pour maintenir le second état (308), récupérer les données à partir du second support de stockage (108) ;
restaurer le contexte du système en utilisant les données récupérées ; et
**caractérisé par**
la reprise, après restauration du contexte du système après une panne d'alimentation, du second état (308) de la pluralité d'états.

2. Procédé selon la revendication 1, dans lequel l'étape de sauvegarde de données représentant le contexte du système actuel comprend la sauvegarde d'au moins une des données relatives à un état opérationnel actuel du processeur (102) et des données relatives au contenu du premier support de stockage (104).

3. Procédé selon la revendication 2, dans lequel l'état opérationnel actuel du processeur (102) est l'un d'une pluralité d'états opérationnels du processeur (102).

4. Procédé selon l'une quelconque des revendications précédentes, dans lequel le système comprend en outre au moins un dispositif, et dans lequel l'étape de sauvegarde de données représentant le contexte de système actuel comprend la sauvegarde de données relatives à un état opérationnel actuel dudit dispositif.

5. Procédé selon la revendication 4, dans lequel l'état opérationnel actuel dudit dispositif est l'un d'une pluralité d'états opérationnels dudit dispositif.

6. Système de gestion d'énergie comprenant un processeur (102), une alimentation électrique et un premier support de stockage (104) et un second support de stockage non volatile ayant respectivement des premier et second temps d'accès aux données tels que le premier temps d'accès aux données est inférieur au second temps d'accès aux données ; le système pouvant fonctionner dans une pluralité d'états, chaque état ayant un niveau de consommation d'énergie associé, le système comprenant en outre :
un moyen pour sauvegarder des données représentant un contexte de système actuel, pour permettre une transition vers un premier état de la pluralité d'états à partir d'un second état de la pluralité d'états pour les deux premier et second supports de stockage (104, 106) ; et
un moyen pour placer le système dans le second état (308) ;
un moyen pour récupérer les données du premier support de stockage (104) en réponse à la détection d'un événement alors que le système est dans le second état (308) ou, dans le cas où l'alimentation électrique, dans le second état (308), a échoué à fournir une puissance suffisante pour maintenir le second état (308), pour récupérer les données du second support de stockage (106) ;
un moyen pour restaurer le contexte du système en utilisant les données récupérées ; et
**caractérisé par**
un moyen pour reprendre, après restauration du contexte du système après une panne d'alimentation, le second état (308) de la pluralité d'états.

7. Système selon la revendication 6, dans lequel le moyen de sauvegarde des données représentant le contexte du système actuel comprend un moyen pour sauvegarder au moins l'une des données relatives à un état opérationnel actuel du processeur (102) et des données relatives au contenu du premier support de stockage (104).

8. Système selon la revendication 7, dans lequel l'état opérationnel actuel du processeur (102) est l'un d'une pluralité d'états opérationnels du processeur (102).

9. Système selon l'une quelconque des revendications 6 à 8, dans lequel le système comprend en outre au moins un dispositif et un moyen pour sauvegarder des données relatives à un état opérationnel actuel dudit dispositif.

10. Système selon la revendication 9, dans lequel l'état opérationnel actuel dudit dispositif est l'un d'une pluralité d'états opérationnels dudit dispositif.

11. Élément de programme informatique pour la mise en oeuvre d'un procédé selon l'une quelconque des revendications 1 à 5.

12. Produit de programme informatique comprenant un support de stockage lisible par ordinateur ayant été stocké sur un élément de programme informatique selon la revendication 11.
